Europäisches Patentamt

European Patent Office

Office européen des brevets

(19)

(11) Veröffentlichungsnummer: **0 324 723**
**A2**

(12) **EUROPÄISCHE PATENTANMELDUNG**

(21) Anmeldenummer: **89810025.0**

(51) Int. Cl.⁴: **F 42 D 3/00**

(22) Anmeldetag: **11.01.89**

(30) Priorität: **12.01.88 CH 87/88**

(43) Veröffentlichungstag der Anmeldung:
**19.07.89 Patentblatt 89/29**

(84) Benannte Vertragsstaaten:
**AT CH DE FR IT LI SE**

(71) Anmelder: **AIR-ZERMATT AG**
**Bahnhofstrasse Postfach**
**CH-3920 Zermatt (CH)**

(72) Erfinder: **Perren, Beat**
**Hofmattstrasse**
**CH-3920 Zermatt (CH)**

**Van Doornick, Bernd**
**c/o Air-Zermatt AG Heliport**
**CH-3942 Raron (CH)**

(74) Vertreter: **Keller, René, Dr. et al**
**Patentanwälte Dr. René Keller & Partner Postfach 12**
**CH-3000 Bern 7 (CH)**

(54) **Verfahren zum Auslösen von Lawinen und Einrichtung zur Durchführung des Verfahrens.**

(57) Die Lawine wird durch eine oberhalb der Schneedecke erzeugte Detonation ausgelöst. Dazu wird ein stabförmiger Sprengkörper (1) in aufrechter Lage von einem Helikopter im Schwebeflug so auf die Schneedecke fallen gelassen, dass sein unteres, spitz verlaufendes Ende (3) in die Schneedecke eindringt und den Sprengkörper (1) während der Detonation in der aufrechten Lage hält. Dazu dient eine an den Helikopter anzuhängende Haltevorrichtung, die für jeden von mehreren Sprengkörpern (1) ein vertikales Halte- und Führungsrohr hat, in dem der Sprengkörper von einer lösbaren Klinke gehalten ist. Die Klinke ist vom Helikopter aus lösbar, woraufhin der Sprengkörper anfangs im Halte- und Führungsrohr in seiner Längsrichtung geführt, vertikal herabfällt. Gleichzeitig wird ein Zeitzünder ausgelöst.

Fig. 1

EP 0 324 723 A2

**Beschreibung**

### Verfahren zum Auslösen von Lawinen und Einrichtung zur Durchführung des Verfahrens

Die Erfindung bezieht sich auf ein Verfahren zum Auslösen von Lawinen und eine Einrichtung zur Durchführung des Verfahrens.

Durch die Erfindung, wie sie in den unabhängigen Patentansprüchen 1 und 5 gekennzeichnet ist, wird die Aufgabe gelöst, Lawinen zielsicher an ausgewählten Stellen der Schneedecke zuverlässig auf besonders wirksame Weise auszulösen.

Die durch die Erfindung erzielten Vorteile sind im wesentlichen darin zu sehen, dass die nach dem erfindungsgemässen Verfahren über der Schneedecke ausgelöste Detonation durch die entstehende Druckwelle besonders wirksam ist, und dass der Sprengkörper (Bombe) der erfindungsgemässen Einrichtung durch sein Stützorgan bis zur Detonation zuverlässig über der Schneedecke gehalten wird, wenn das Stützorgan in diese eingedrungen ist, nachdem der Sprengkörper mit der Haltevorrichtung auf die gewählte Stelle der Schneedecke abgesenkt und von der Haltevorrichtung gelöst oder über der gewählten Stelle von der Haltevorrichtung frei fallen gelassen wurde.

In den abhängigen Patentansprüchen sind besondere Ausführungsarten des Verfahrens und der Einrichtung angegeben, durch die weitere erzielt werden, wie nachfolgend ersichtlich.

Im folgenden werden das erfindungsgemässe Verfahren und die erfindungsgemässe Einrichtung anhand der beiliegenden, lediglich Ausführungswege schematisch darstellenden Zeichnungen näher erläutert. Es zeigen

Fig 1 eine Seitenansicht eines Sprengkörpers zum Auslösen von Lawinen,

Fig 2 einen Achsenlängsschnitt nach der Linie II-II in Fig. 1, in grösserem Massstab,

Fig 3 einen Achsenlängsschnitt nach der Linie III-III in Fig. 1, wobei der Sprengkörper mit einem Abreisszünder ausgerüstet und lösbar in einem Halter gehalten ist, in grösserem Massstab,

Fig 4 eine teilweise Seitenansicht einer an einen Helikopter zu hängenden Einrichtung zum lösbaren Halten mehrerer Sprengkörper,

Fig 5 eine Draufsicht zu Fig. 4,

Fig 6 einen Achsenlängsschnitt des oberen Endes eines Sprengkörpers mit elektrischer Zündung, an einer Haltevorrichtung,

Fig 7 eine Winde zum Absenken der Haltevorrichtung nach Fig. 6 und einen Teil einer Schaltung für die Anordnung nach Fig. 6,

Fig 8 eine Fig. 3 entsprechende Ansicht einer teilweisen Variante,

Fig 9 eine Draufsicht zu Fig. 8,

Fig 10 eine Untersicht eines Teiles von Fig. 8,

Fig 11 eine weitere Variante zu Fig. 8,

Fig. 12 eine teilweise Draufsicht einer Vorrichtung zum aufeinanderfolgenden Lösen der Sperren einer Einrichtung der in Fig. 4, 5 und 15 dargestellten Art,

Fig. 13 einen Schnitt nach der Linie XIII-XIII in Fig. 12,

Fig. 14 eine Seitenansicht eines Teiles von Fig. 12 in Blickrichtung XIV,

Fig. 15 eine Seitenansicht einer an einen Helikopter zu hängenden Einrichtung zum lösbaren Halten mehrerer Sprengkörper,

Fig. 16 die Einzelheit A von Fig. 15, in grösserem Massstab.

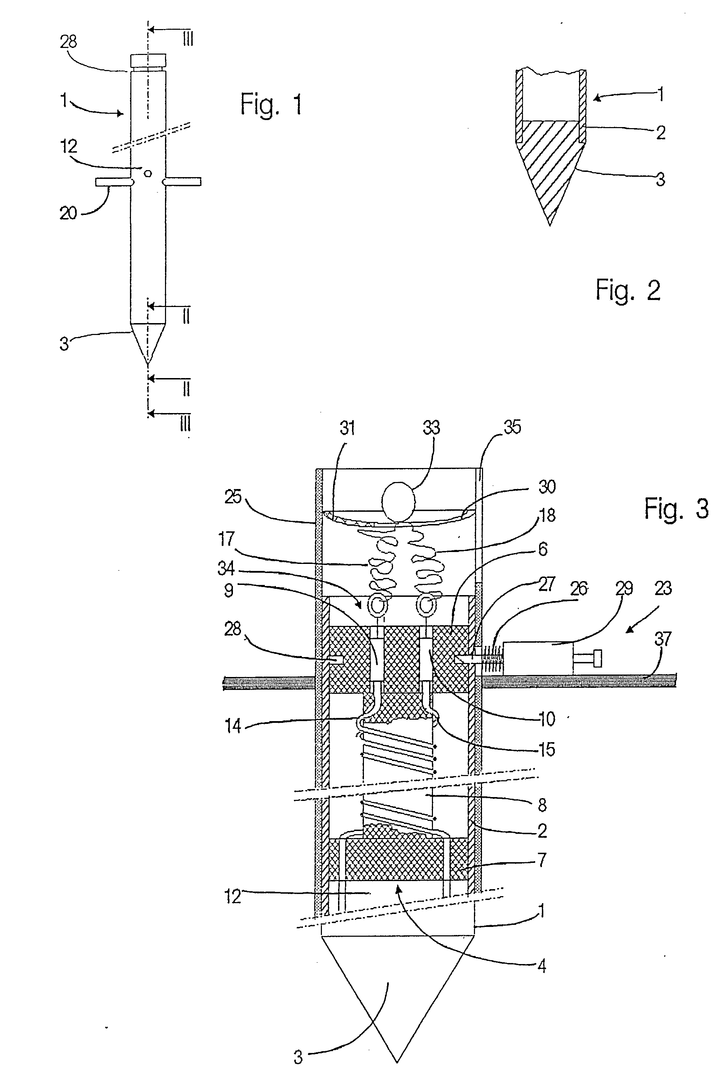

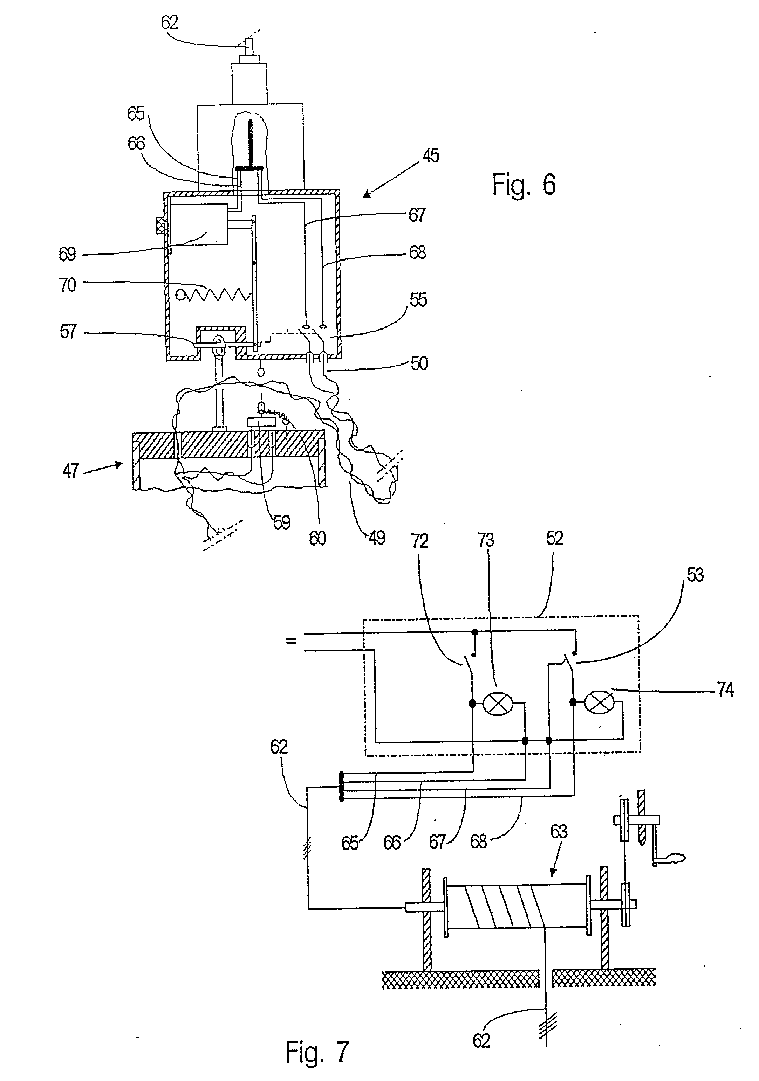

Der Sprengkörper 1 nach Fig. 1 bis 3 bzw. 47 nach Fig. 6 hat ein längliches, zylindrisches Gehäuse, dessen Mantel durch eine Kartonhülse 2 gebildet ist, die beispielsweise 170 cm lang sein kann, bei einem Durchmesser von 6 cm und einer Wandstärke von 3 mm. Am in der aufrechten Gebrauchslage des Sprengkörpers 1 unteren Ende sitzt in der Hülse 2 ein konischer Holzteil 3, der eine Gehäusespitze bildet. In das obere Ende der Hülse 2 des Sprengkörpers ist ein zylindrischer, ebenfalls aus Holz bestehender Teil 4 dreh- und zugfest eingesetzt. Der Teil 4 hat an seinen Enden je einen in die Hülse 2 passenden Flansch 6 und 7, und zwischen diesen Flanschen ein Teilstück 8 kleineren Durchmessers, das mit einer zweigängigen Schraubennut versehen ist. In den Flansch 6 sind zwei Abreisszünder 9 und 10 eingesetzt, z. B. eingeklebt. Im Gehäuseraum zwischen dem die Gehäusespitze bildenden Teil 3 und dem Flansch 7 ist der Sprengstoff 12 untergebracht, beispielsweise in einem oder mehreren in die Hülse 2 passenden Kunststoffbehältern. Jeder der Abreisszünder 9 und 10 ist mit einer (nicht dargestellten) Sprengkapsel im Sprengstoff 12 durch eine Zündschnur 14 bzw. 15 verbunden, die in eine der Schraubennuten in einem Abstand von der anderen um das Teilstück 8 gewickelt und durch ein Loch des Flansches 7 hindurchgeführt ist. Der Flansch 6 bildet einen oberen Gehäusedeckel, aus dem die Abreissschnüre oder -drähte 17 und 18 frei herausragen. An sich würde auch ein Zünder genügen. Der Sprengkörper 1 kann statt mit Abreisszündern auch mit anderen Zündmitteln, z. B. für elektrische Zündung ausgeführt sein (vgl. Fig. 6 und 7). Die Hülse 2 und die Teile 3 und 4 können natürlich auch aus einem anderen Material als Karton bzw. Holz bestehen. Diese Materialien sind jedoch vorteilhafterweise umweltfreundlich, weil sie leicht verrotten. In einem Abstand von z. B. 30 bis 40 cm über der Gehäusespitze (Teil 3) sind zwei, zweckmässig ebenfalls aus Holz bestehende Stäbe 20 einander kreuzend diametral durch die Hülse 2 gesteckt und ragen z. B. 6 cm aus dieser heraus, sie hindern den Sprengkörper 1 (bzw. 47) daran, zu tief in die Schneedecke einzudringen und, falls der Sprengkörper beim weiter unten beschriebenen Absenken oder Abwerfen auf die Schneedecke treffen oder ausnahmsweise nicht standfest auf dieser stehen bleiben, sondern umfallen sollte, hindern diese Stäbe 20 ihn daran, auf der in der Regel steilen Schneedecke herabzugleiten und dann nicht an der gewählten Stelle zu detonieren.

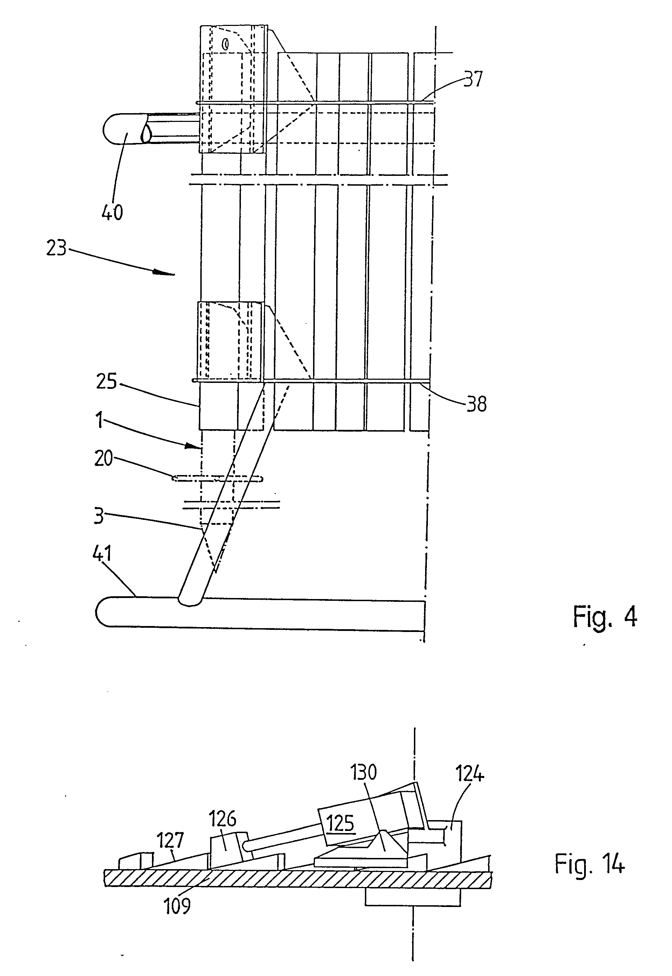

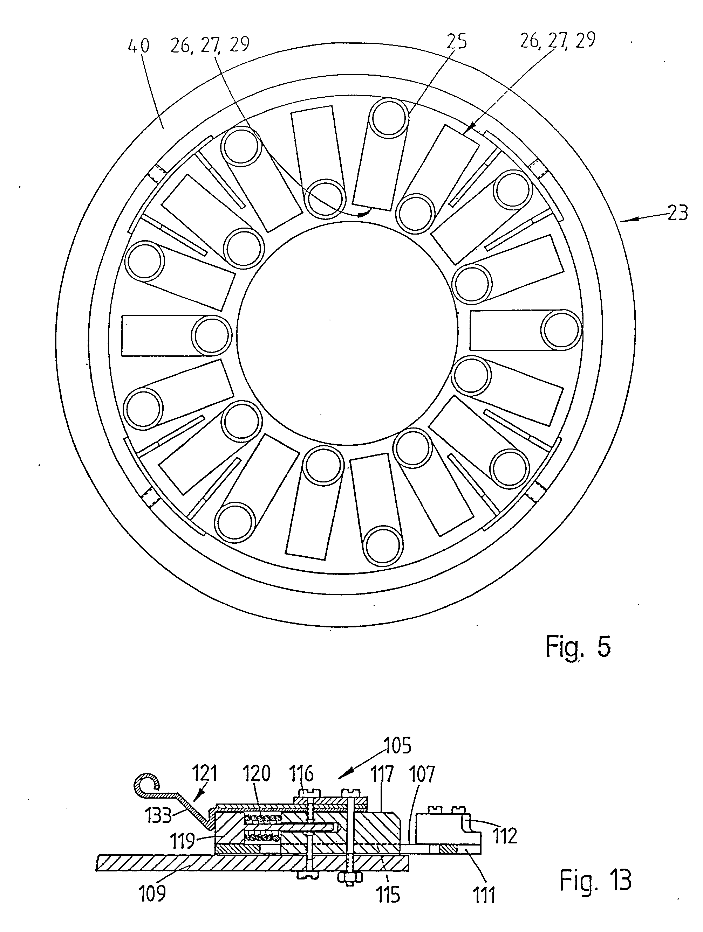

Zum Auslösen einer Lawine kann der Sprengkörper von einem geeigneten Transportmittel, insbesondere Helikopter, über eine zum Auslösen der Lawine gewählte Stelle der Lawine gebracht und dort im Stillstand des Transportmittels, insbesondere im Schwebeflug des Helikopters, in aufrechter Lage auf die Stelle fallen gelassen werden. Fig. 4 und 5 zeigen eine an einem Transportmit tel zu befestigende, insbesondere an einen Helikopter zu hängende Haltevorrichtung 23, mit der mehrere Sprengkörper 1 transportiert und einzeln in aufrechter Lage fallen gelassen werden können, Fig. 3 zeigt eine Einzelheit dieser Haltevorrichtung in Zusammenhang mit einem lösbar gehaltenen Sprengkörper 1 mit den Abreisszündern 9, 10. Die Haltevorrichtung 23 hat mehrere, in Gebrauchlage der Haltevorrichtung vertikale, je einen Sprengkörper 1 aufnehmende Halte- und Führungsrohre 25, deren jedes mit einer Klinke 27 ausgerüstet ist, die unter der Wirkung einer Feder 26 in eine am Umfang des Sprengkörpers 1 verlaufende Nut 28 greift und von einem Elektromagneten 29 gegen die Kraft der Feder 26 zurückgezogen werden kann, woraufhin der Sprengkörper 1 in seiner durch das Führungsrohr 25 bestimmten vertikalen Lage und Richtung herabfällt. Das Führungsrohr 25 hat oben eine mit einem Schlitz 30 versehene Mulde 31, in der eine Kugel (Abreissknopf) 33 liegt, die an den freien Enden der Abreissschnüre oder -drähte 17, 18 befestigt ist. Die Abreissschnüre oder -drähte 17, 18 sind so viel länger als der Abstand des Sprengkörpers 1 von der Mulde 31, dass sie erst dann gespannt sind, wenn der von der Klinke 27 freigegebene Sprengkörper 1 eine Fallgeschwindigkeit erreicht hat, die zusammen mit seiner Masse das Abreissen der Abreissschnüre oder -drähte 17, 18 sicher gewährleistet. Das Halte- und Führungsrohr 25 hat am oberen Ende eine Aussparung 35, die es ermöglicht, die Abreissschnüre oder -drähte 9, 10 in den Schlitz 30 einzuführen und gleichzeitig die Kugel oder Walze in die Mulde 31 zu legen, nachdem der Sprengkörper 1 in das Halte- und Führungsrohr 25 eingeführt wurde. Solange der Sprengkörper 1 noch nicht in die Haltevorrichtung 23 eingesetzt ist, befinden sich die Abreissschnüre 17, 18 mit dem Abreissknopf 33 über dem Flansch 6 in einem Hohlraum 34 am oberen Ende der Hülse 2. Ein nicht dargestellter Deckel, der diesen Raum 34 verschliesst, wird erst vor dem Einführen des Sprengkörpers 1 in das Halte- und Führungsrohr 25 abgenommen.

Mehrere Halte- und Führungsrohre 25 sind nach Fig. 4 und 5 oben in Löchern einer oberen Tragplatte 37 und unten in Löchern einer unteren Tragplatte 38 eines Gestells mit einem oberen und einem unteren Gestellrahmen 40 und 41 befestigt, das in vertikaler Lager der Halte-und Führungsrohre 25 an einem Transportmittel zu befestigen ist, z. B. an einen Helikopter zu hängen ist. An der oberen Tragplatte 37 sind die in Fig. 4 und 5 nicht dargestellten Klinkenmechanismen (26, 27, 29 in Fig. 3) angeordnet, von deren Elektromagneten 29 (nicht dargestellte) Leitungen z. B. zum Helikopter führen. An der unteren Tragplatte 38 können Fühler angeordnet sein, die je in eine Oeffnung eines der Halte- und Führungsrohre 25 greifen, um festzustellen bzw. zu überwachen, ob das Rohr 25 geladen ist, d. h. einen Sprengkörper 1 enthält bzw. ob dieser das Rohr 25 verlassen hat.

Von den (nicht dargestellten) Fühlern führen Leitungen zu (nicht dargestellten) Signalvorrichtungen im Helikopter. Um das Einführen der Sprengkörper 1 in die Halte-und Führungsrohre 25 des Gestells der Haltevorrichtung 23 zu erleichtern, ist dasselbe zweckmässig so ausgebildet, dass es auch in horizontaler Lage der Halte-und Führungsrohre 25 auf den Boden abgestützt werden kann. Beispielsweise können zu diesem Zwecke die Gestellrahmen 40, 41 polygonal sein.

Die Einrichtung nach Fig. 6 und 7 ist für elektrische Zündung ausgeführt. Der Zündstromkreis hat zwischen der Haltevorrichtung 45 und dem Sprengkörper 47 flexible Leitungen 49 mit zwei Bananensteckern 50, die an der Haltevorrichtung 45 in vertikal angeordneten Buchsen stecken. Die Leitungen 49 sind wesentlich länger als der Abstand des Sprengkörpers 47 von der ihn haltenden Haltevorrichtung 45. Im Zündstromkreis liegen ein Arbeitskontakt (Schliesser) eines in einem Bedienungsgerät 52 (z. B. im Helikopter) enthaltenen Schalters 53 (Fig. 7) in Reihe mit in der Haltevorrichtung 45 angeordneten Schaltkontakten 55. Die Schaltkontakte 55 sind mit einer den Sprengkörper 47 lösbar haltenden Klinke 57 gekoppelt, so dass sie in deren Wirkungslage offen (wie dargestellt) und nur bei gelöster Klinke 57 geschlossen sind. Der Schalter 53 hat zusätzlich zum Arbeitskontakt (Schliesser) einen Ruhekontakt (Oeffner), der den Zündstromkreis kurzschliesst, wenn der Arbeitskontakt (Schliesser) offen ist. Im Sprengkörper 47 ist der Zündstromkreis durch einen Kurzschlussstecker 59 (im in Fig. 6 dargestellten Zustand) kurzgeschlossen, der an der Oberseite des Sprengkörpers 47 angeordnet und mit der Haltevorrichtung 45 so verbunden wird, dass er zwangsläufig aus seinen Buchsen herausgezogen wird, sobald der Sprengkörper 47 sich von der Haltevorrichtung 45 entfernt. Bis zum Anhängen des Sprengkörpers 47 an die Haltevorrichtung 45 ist der Kurzschlussstecker 59 mit dem Sprengkörper 47 durch eine Sicherheitsschnur oder -draht 60 verbunden, der kurz vor oder nach dem Anhängen durchgeschnitten wird. Die Haltevorrichtung 45 hängt an einem Seil 62 einer Seilwinde 63 (z. B. im Helikopter), das Leitungen 65, 66, 67, 68 für den Zündstrom und für einen Elektromagneten 69 enthält, durch den die Klinke 57 gegen die Kraft einer Feder 70 zurückgezogen werden kann, um die Haltevorrichtung 45 vom Sprengkörper 47 zu lösen. Im Erregerstromkreis des Elektromagneten 69 liegt ein weiterer Schalter 72 des Bedienungsgerätes 52.

Zum Auslösen von Lawinen wird die Haltevorrichtung 45 mit daran hängendem Sprengkörper 47 über der gewählten Stelle der Schneedecke mittels der Winde 63 abgesenkt (z. B. von einem Helikopter im Schwebeflug), um den Sprengkörper 47 in aufrechter Lage so auf die Schneedecke zu setzen, dass sein unteres Ende in der Schneedecke steckt und ihn in dieser Lage hält. Dann wird der Schalter 72 geschlossen, wodurch die Klinke 57 gelöst und gleichzeitig die Schaltkontakte 55 geschlossen werden, eine Signallampe 73 zeigt dies an. Danach wird die Haltevorrichtung 45 mittels der Winde 63 von dem Sprengkörper 47 abgehoben, wobei sich der Kurzschlussstecker 59 von dieser löst, dessen Sicherheitsschnur oder -draht 60 beim Anhängen des Sprengkörpers 47 an die Haltevorrichtung 45 durchgeschnitten wurde. Schliesslich wird mit dem Schalter 53 der Zündstrom eingeschaltet, eine zweite Signallampe 74 zeigt dies an, und durch weiteres Heben der Haltevorrichtung 45 wird auch die Steckerverbindung 50 gelöst, und die Haltevorrichtung 45 ist zum Einsatz mit einem anderen Sprengkörper verfügbar.

Die Haltevorrichtung 45 (Fig. 6) kann sinngemäss auch mit Merkmalen der Haltevorrichtung 23 (Fig. 3, 4, 5) ausgeführt und/oder verwendet werden, beispielsweise für mehrere Sprengkörper mit Abreiss- oder elektrischem Zünder, mit einem oder mehreren Halte- und Führungsrohren (25) oder anderer Klinke (27) sowie zum Fallenlassen statt Absenken des oder der Sprengkörper. Dies gilt entsprechend auch umgekehrt, beispielsweise für eine Ausführung der Halteeinrichtung 23 für Sprengkörper mit elektrischer Zündung.

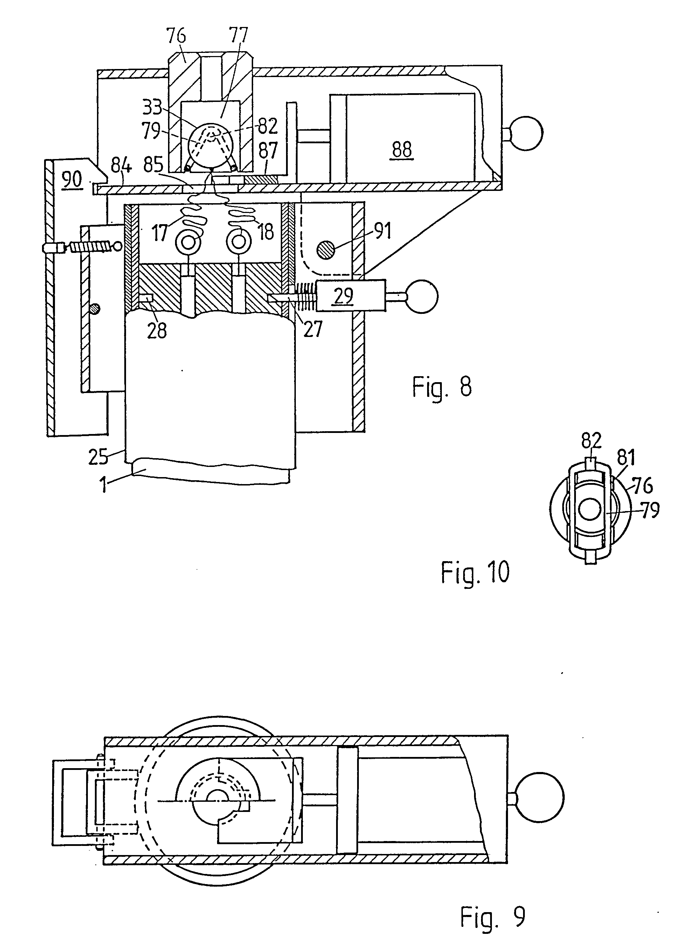

Die in Fig. 8, 9 und 10 dargestellte Variante zu Fig. 3 hat einen zylindrischen Körper 76 mit einem Hohlraum 77 zur Aufnahme des Abreissknopfes 33. Dabei ist der Abreissknopf 33 auf zwei parallelen Abschnitten einer endlosen Gummischnur 79 unterstützt, die zwischen Nuten 81 am unteren Rand des Körpers 76 und zwei diametralen Stiften 82 an dessen Aussenseite gespannt ist, vgl. Fig. 10.

Der Hohlraum 77 ist von unten durch eine in einer Platte 84 gebildete Oeffnung 85 zugänglich, die durch einen Schieber 87 teilweise verschliessbar ist. Der Schieber 87 ist durch einen Elektromagneten 88 gegen die Kraft einer nicht dargestellten Feder aus einer (nicht dargestellten) zurückgezogenen Ruhestellung, in der er die Oeffnung 85 offen hält, in die dargestellte Arbeitsstellung verschiebbar, in der er die Oeffnung 85 so weit verschliesst, dass der Abreissknopf 33 nicht hindurchtreten kann.

Wenn die Einrichtung mit Sprengkörpern 1 geladen wird, wird der Abreissknopf 33 in Ruhelage des Schiebers 87 durch die Oeffnung 85 hindurch in den Hohlraum 77 eingeführt, wobei die parallelen Abschnitte der Gummischnur 79 seitlich nachgeben. Zum Einführen wird die Baugruppe 76, 84, 87, 88 nach Lösen einer federnden Klinke 90 vorübergehend um eine Achse 91 hochgeschwenkt, so dass die Oeffnung 85 zugänglich ist. In Ruhelage des Schiebers 87 ist der Abreissknopf 33 dann von den Abschnitten der Gummischnur 79 so nachgiebig unterstützt, dass er durch die Oeffnung 85 von einer Zugkraft herausgezogen werden kann, die sehr viel kleiner ist als die zum Zünden des Sprengkörpers 1 durch Abreissen der Abreissschnüre 17, 18 erforderliche Kraft. Nur in der Wirkungsstellung des Schiebers 87, in der der Abreissknopf 33 die Oeffnung 85 nicht passieren kann, sind die Abreissschnüre 17, 18 so fest gehalten, dass sie bei herabfallendem Sprengkörper 1 zum Zünden abreissen, wie oben im Zusammenhang mit Fig. 3 erläutert. Die beiden Elektromagnete 88 und 29 liegen gemeinsam in einem Stromkreis, so dass jeweils gemeinsam der Schieber 87 in Wirkungslage geschoben und die Klinke 27 zurückgezogen wird. Dadurch wird sowohl ein unbeabsichtigtes Zünden vermieden als auch ein beabsichtigtes Zünden sichergestellt.

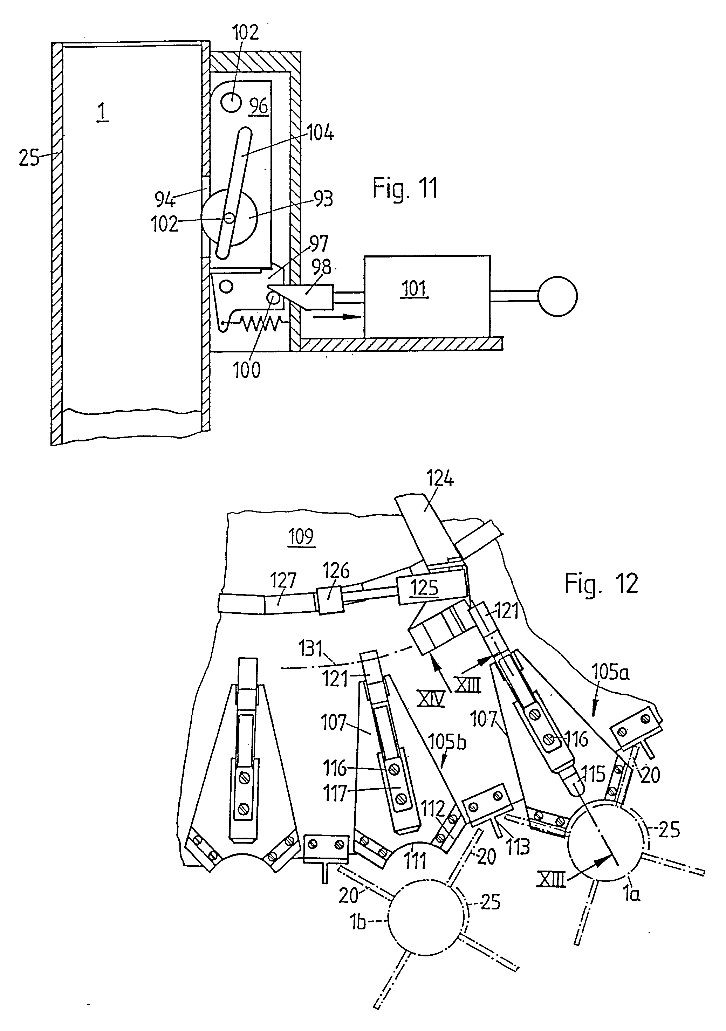

Fig. 11 zeigt eine teilweise Variante zu Fig. 3 und 8, bei welcher der Sprengkörper 1 statt durch eine Klinke oder einen Riegel (27 in Fig. 3 und 8) durch ein Reibrad 93 daran gehindert wird, in dem Halte- und Führungsrohr 25 abwärts zu gleiten. Das Reibrad 93 greift durch eine Aussparung 94 der Wand des Rohres 25 hindurch am Mantel des Spengkörpers 1 an und ist ein Teil eines Gesperres, das einen Hebel 96, eine Klinke 97 und einen Schieber 98 mit einer Schräge hat, an der ein an der Klinke 97 befestigter Stift 100 geführt ist. Der Schieber 98 ist mittels eines Elektromagneten 101 in Pfeilrichtung gegen die Kraft einer nicht dargestellten Feder verschiebbar. Der Hebel 96 ist oben um eine Achse 102 drehbar gelagert und unten durch die Klinke 97 parallel zum Rohr 25 gehalten. Dazu ist die Klinke 97 durch eine Feder belastet. Die Asche 102 des Reibrades 93 ist in Schlitzen 104 des Hebels 96 verschiebbar geführt, die mit der Längsrichtung des Rohres 25 nach unten konvergieren. In der dargestellten Lage der beweglbaren Teile wirkt das Ganze in bekannter Weise wie ein sog. Rollengesperre. Um den Sprengkörper 1 in Abwärtsrichtung freizugeben, wird der Elektromagnet 101 erregt, der Schieber 98 löst dann die Klinke 97 vom Hebel 96. Damit ist die Sperrwirkung aufgehoben, und der Sprengkörper I fällt herab. Wenn der Sprengkörper 1 Abreisszünder hat und deren Abreissknopf wie in Fig. 8 gezeigt gehalten ist, wird der Elektromagnet 101 so wie der Elektromagnet 29 in Fig. 8 gemeinsam mit dem Elektromagneten 88 erregt. Das in Fig. 11 gezeigte Gesperre mit Reibrad 93 hat im Vergleich mit dem Gesperre mit Klinke oder Riegel (27 in Fig. 3 und 8) den Vorteil, dass keine Aussparung (z. B. Ringnut 28) am Mantel des Sprengkörpers 1 erforderlich ist, und dass derselben leichter in das Rohr 25 eingeführt werden kann und in Abwärtsrichtung gesperrt ist, ohne dass eine bestimmte Lage des Sprengkörpers 1 im Rohr 25 eingehalten werden muss.

Bei einer vorzugsweisen Ausführungsart der Einrichtung sind mehrere Haltevorrichtungen, insbesondere vertikale Führungsrohre auf einem Kreis angeordnet, indem sie oben an einem Ring und unten an einem Ring befestigt sind (ähnlich Fig. 4 und 5). Dabei können die entsprechend in einem zu den Ringen koaxialen Kreis angeordneten Sperren nacheinander durch eine Vorrichtung gelöst werden, die auf einer zu den Ringen koaxialen Bahn bewegt wird, um die Sprengkörper 1 nacheinander fallen zu lassen. Ein Ausschnitt einer Draufsicht eines Beispiels einer solchen Anordnung mit Sperren 105 ist in Fig. 12, 13 und 14 gezeigt, wobei der Sprengkörper 1a von der Sperre 105a unterstützt ist, und der Sprengkörper 1b von der Sperre 105b gelöst ist, um herabzufallen. Bei diesem Beispiel hat jede Sperre 105 ein Stützglied 107, das in einer Wirkungslage 107a den Sprengkörper 1 unterstützt, in diesem Falle an zwei einander benachbarten Enden der Stäbe 20 (Fig. 1), welche die Eindringtiefe des Sprengkörpers 1 in den Schnee begrenzen. Demgemäss sind die Stützglieder 107 unterhalb von Führungsrohren 25 welche die Sprengkörper 1 oberhalb der Stäbe 20 aufnehmen, in Fig. 11 also vor der Zeichenebene liegen und strichpunktiert angedeutet sind. Jedes der Stützglieder 107 kann in eine Ruhelage (z. B. 105b) zurückgezogen werden, in der es den Sprengkörper 1, wie am Sprengkörper 1b gezeigt, nicht mehr unterstützt, so dass er herabfällt.

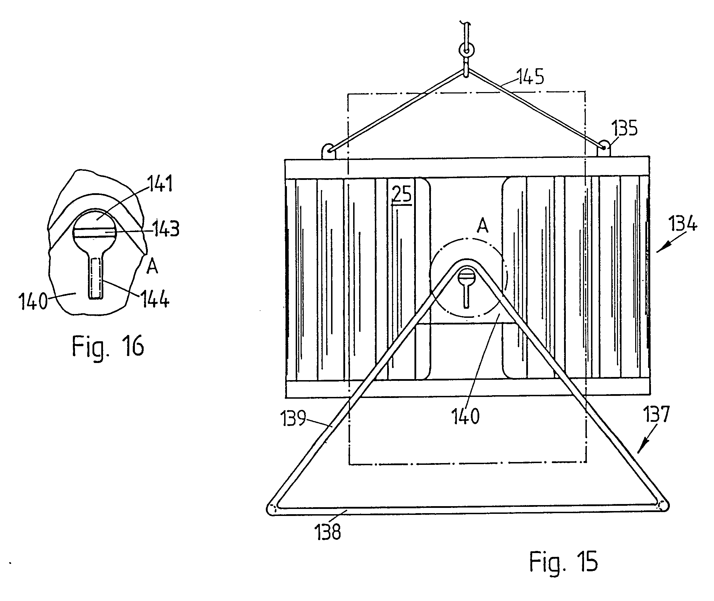

Die Sperren 105 und die Vorrichtung zum Auslösen derselben sind auf einer kreisförmigen Platte 109 montiert. Jedes Stützglied 107 hat beiderseits einer Aussparung 111 zwei horizontale kurze L-Profilleisten 112. In Wirkungslage des Stützglieds 107 ragt der Sprengkörper 1 in die Aussparung 111 hinein und zwei einander benachbarte Enden der Stäbe 20 stützen sich je auf eine der L-Profilleisten 112. Zwischen einander zugewandten L-Profilleisten 112 benachbarter Sperren 105 sind vertikal angeordnete, kurze T-Profilleisten 113. Diese erzwingen bereits nach einer kurzen Verschiebung des Stützgliedes 107 ein Abstreifen der Stäbe 20 von den L-Profilleisten 112 und damit vom Stützglied 107. Jedes Stützglied 107 ist mit einem Schlitz 115 versehen, in den ein an die Platte 109 geschraubter Teil 117 greift, der das Stützglied 107 radial auf der Platte 109 verschiebbar führt. Zwischen dem durch die Bolzen 116 fest mit der Platte 109 verbundenen Teil 117 und einem fest mit dem Stützglied 107 verbundenen Widerlager 119 ist eine Druckfeder 120 angeordnet. In Ruhelage des Stützgliedes 107 ist die Feder 120 gespannt, indem eine am Teil 117 befestigte, federnde Klinke 121 am Widerlager 119 angreift und die Kraft der Feder 120 aufnimmt. Wenn das in Fig. 13 linke Ende der Klinke 121 gehoben die Klinke dadurch vom Widerlager 119 gelöst wird, stösst die Druckfeder 120 das Stützglied 107 in seine Ruhelage zurück. Ohne die T-Profilleisten 113 müsste das Stützglied 117 weiter aus seiner Wirkungslage verschoben werden, um auch einen zufällig in der Verschiebungsrichtung stehenden Stab 20 zuverlässig zu lösen. Im übrigen könnte der Sprengkörper 1 auch an seinem untersten Ende oder z. B. mit einem gabelförmigen Stützglied, dessen Weite kleiner als der Durchmesser des zylindrischen Teils des Sprengkörpers ist, im Bereich seiner Verjüngung 3 (Fig. 1) unterstützt werden.

Die Vorrichtung zum Lösen der Sperren 105 ist am Ende eines in der Mitte der Platte 109 drehbar gelagerten Armes 124 befestigt und mittels eines Schrittschaltwerks in jeweils zwei Schritten von einer Sperre 105 zur nächsten drehbar. Das Schrittschaltwerk hat eine mittels eines Elektromagneten 125 jeweils um einen Schritt vor- und wieder zurück schiebbare Klinke 126 und eine längs einer Kreisbahn verlaufende Zahnstange 127 mit Sperrzähnen an deren vertikalen Flanken die Klinke 126 jeweils angreift. Die bei Schrittschaltwerken übliche Sperrklinke, die nach jedem Vorschubschritt eine Rückwärtsbewegung verhindert, ist nicht dargestellt. Ein am Ende des Armes 124 befestigter Kurventräger mit einem Nocken 130 läuft bei Drehung des Arms 124 auf einem kreisförmigen Weg 131 (Fig. 12) unter dem in Fig. 13 linken Ende der Klinken 121. Dabei hebt der Nocken 130 eine Klinke 121 nach der anderen an und löst sie dadurch vom Widerlager 119, so dass die Druckfeder 120 das Stützglied 107 aus seiner Wirkungslage (Sperre 105a) in die Ruhelage (Sperre 105b) stösst, woraufhin der dann nicht mehr unterstützte Sprengkörper 1b herabfällt.

Die Stützglieder 107 können von Hand in ihre Wirkungslage zurückgeführt werden, wobei das Widerlager 119 an einer Schräge 133 der Klinke 121 angreift und diese vorübergehend hebt, bis sie hinter das Widerlager 119 greift und dieses gegen die Kraft der Feder 120 in der Wirkungslage des Stützgliedes 107 abstützt.

Nach Fig. 15 sind Führungsrohre 25 (vgl. Fig. 3, 8, 11) wie Stäbe eines zylindrischen Käfigs vertikal angeordnet, fest miteinander verbunden und je mit einer nicht dargestellten, lösbaren Sperre (z. B. 27 in Fig. 3 und 8, 93 in Fig. 11, 107 in Fig. 12) ausgerüstet. Die so gebildete Einheit 134 ist mit Oesen 135 versehen, so dass sie an einen Helikopter gehängt werden kann, um Sprengkörper an die gewünschten Stellen der zu sprengenden Lawinen zu bringen und dort durch Lösen der Sperren einzeln nacheinander herabfallen zu lassen. Um das Laden der Einheit 134 mit Sprengkörpern zu erleichtern und zu beschleunigen, ist diese mit einem auf dem Boden absetzbaren Gestell 137 drehbar verbunden. Das Gestell 137 hat einen Grundrahmen 138 an dem zwei durch Streben 139 abgestützte Lagerplatten 140 (von denen in Fig. 14 nur eine erkennbar ist) gehalten sind. Jede Lagerplatte 140 ist mit einer Lagerbohrung 141 versehen, in der ein fest mit der Einheit 134 verbundener Lagerzapfen 143 drehbar und nach einer Drehung um 90° abwärts verschiebbar und dann drehfest gehalten ist, wie in Fig. 16 strichpunktiert dargestellt. Dazu hat der Lagerzapfen 143 einen flachen Querschnitt und die Lagerbohrung 141 eine schlitzförmige, diesem Querschnitt angepasste Erweiterung 144. Nach der Drehung der Einheit 134 sind deren Führungsrohre 25 in horizontaler Lage, so dass die Sprengkörper leicht eingeführt und die Sperren (soweit erforderlich) in Wirkungslage gebracht werden können. Wenn der Helikopter dann das Tragseil 145 nach oben zieht, wird die Einheit 134 gehoben und gleichzeitig aufgerichtet. Dabei gleiten die Lagerzapfen 143 in einer bestimmten Schräglage der Einheit 134 mit dem Gestelle 137 aus den schlitzförmigen Erweiterungen 144 in die Lagerbohrung 141 zurück, und das Gestell 137 hängt schliesslich wieder an der Einheit 134 in der in Fig. 15 gezeigten Lage.

## Patentansprüche

1. Verfahren zum Auslösen von Lawinen, dadurch gekennzeichnet, dass Sprengstoff (12) an der Stelle, an der die Lawine ausgelöst werden soll, oberhalb der Schneedecke zur Detonation gebracht wird.

2. Verfahren nach Anspruch 1, dadurch gekennzeichnet, dass wenigstens der überwiegende Teil des Sprengstoffes durch in den Schnee greifende, vorzugsweise in den Schnee gesteckte Mittel (3) in einem Abstand über der Schneedecke gehalten und zur Detonation gebracht wird.

3. Verfahren nach Anspruch 2, dadurch gekennzeichnet, dass ein Sprengkörper (1; 47) über der Stelle, an der die Lawine ausgelöst werden soll, insbesondere von einem Helikopter im Schwebeflug, abgesenkt oder fallen gelassen wird, so dass wenigstens der überwiegende Teil der Sprengladung (12) durch das beim Auftreffen auf die Schneedecke in diese eindringende Abstützmittel (3) bis zur Detonation im Abstand über der Schneedecke gehalten wird.

4. Verfahren nach Anspruch 3, dadurch gekennzeichnet, dass durch das Lösen des abgesenkten Sprengkörpers (47) von einer Absenkvorrichtung (45, 63) oder das Lösen des Sprengkörpers (1) von einer zum Fallenlassen lösbaren Haltevorrichtung (23) eine Zündung der Sprengladung mit Verzögerung ausgelöst wird.

5. Sprengkörper zur Durchführung des Verfahrens nach einem der Ansprüche 1 bis 4, dadurch gekennzeichnet, dass wenigstens der grösste Teil der Sprengladung (12) in einem Abstand über einem Stützorgan (3) angeordnet ist, das bei einem Absenken oder Herabfallen des Sprengkörpers (1; 4) auf die Schneedecke in diese eindringt, um die Sprengladung (12) im wesentlichen in einem Abstand über der Schneedecke abzustützen.

6. Sprengkörper nach Anspruch 5, gekennzeichnet durch ein im wesentlichen rohrförmiges Gehäuse (2), das die Sprengladung (12) mit den Zündmitteln, z. B. Abreisszünder (9, 10) oder elektrischen Zündmitteln, enthält und am unteren Ende zu einer Spitze (3) zum Eindringen in die Schneedecke verjüngt ist.

7. Sprengkörper nach Anspruch 5 oder 6, gekennzeichnet durch ein die Eindringtiefe des Sprengkörpers (1; 47) in die Schneedecke begrenzendes Organ (20), das zweckmässig auch ein Gleiten oder Rollen des Sprengkörpers (1; 47) auf der Schneedecke verhindert, wenn dieser nicht standfest in die Schneedecke eingedrungen ist.

8. Sprengkörper nach einem der Ansprüche 5 bis 7, gekennzeichnet durch wenigstens einen Abreisszünder (2, 10) und einem im obersten Teil des Sprengkörper-Gehäuses (2) gebildeten, verschliessbaren Hohlraum (34), der die Abreissschnur (17, 18) bis zum Gebrauch des Sprengkörpers (1) aufnimmt.

9. Sprengkörper nach einem der Ansprüche 5 bis 8, gekennzeichnet durch wenigstens einen Abreisszünder (2, 10), dessen am Sprengkörper (1) nach oben abzureissende Abreissschnur (17, 18) länger ist als die Strecke, die der Sprengkörper (1) im freien Fall zurücklegen muss, damit seine Trägheitskraft die zum Abreissen der Abreissschnur (17, 18) erforderliche Kraft überschreitet.

10. Sprengkörper nach einem der Ansprüche 5 bis 7, dadurch gekennzeichnet, dass er einen elektrischen Zünder enthält, und dass an der Oberseite des Sprengkörper-Gehäuses (2) durch aufwärts gerichteten Zug lösbare Zündstromleitungen und ein parallel zum Zünder geschalteter Schaltkontakt (59) der in seinem Ruhezustand den Zünder kurzschliesst und bei einem aufwärts gerichteten Zug zwangsläufig öffnet, angebracht sind.

11. Einrichtung zum Transportieren und Placieren von Sprengkörpern nach einem der Ansprüche 5 bis 10, gekennzeichnet durch wenigstens eine Haltevorrichtung (25, 27; 25, 93; 25, 107) zum lösbaren Halten jeweils eines Sprengkörpers (1; 47) in aufrechter Lage mit nach unten gerichtetem Stützorgan (3).

12. Einrichtung nach Anspruch 11, dadurch gekennzeichnet, dass jede Haltevorrichtung eine Führung, insbesondere ein Führungsrohr (25), zum vertikalen Führen jeweils eines Sprengkörpers (1) in der Lage, in der sein Stützorgan (3) nach unten gerichtet ist, aufweist und mit einer lösbaren Sperre (27; 93; 107), z. B. Klinken-, Riegel-, Reibgesperre, ausgerüstet ist, um eine Abwärtsbewegung des geführten Sprengkörpers (1) zu verhindern und durch Lösen der Sperre auszulösen.

13. Einrichtung nach Anspruch 12, dadurch gekennzeichnet, dass die Sperre ein unter dem unteren Ende der Führung (25) angeordnetes Glied (107) aufweist, das in eine Wirkungslage zum Unterstützen eines in der Führung verschiebbaren Sprengkörpers (1) und in eine Ruhelage bewegbar ist.

14. Einrichtung nach einem der Ansprüche 11 bis 13, dadurch gekennzeichnet, dass jede Haltevorrichtung mit Befestigungsmitteln (79, 87) für das freie Ende der Abreissschnur oder -schnüre (17, 18) wenigstens eines Abreisszünders (9, 10) des zu haltenden Sprengkörpers (1) ausgerüstet ist.

15. Einrichtung nach Anspruch 14, dadurch gekennzeichnet, dass die Befestigungsmittel eine durch eine Oeffnung (85) von unten zugängliche seitlich nachgiebige Unterstützung (79) für einen Abreissknopf (33) wenigstens einer Abreissschnur (17, 18) aufweist, und dass die Oeffnung (85) mit einem Verschlussorgan, vorzugsweise einem Schieber (87) versehen ist, der die Oeffnung in seiner Ruhelage offen hält und in einer Wirkungslage so weit schliesst, dass der Abreissknopf (33) nicht hindurchtreten kann, so dass die Abreissschnur oder -schnüre (17, 18) zugfest gehalten sind, wobei zweckmässig die Sperre (27) durch einen Elektromagneten (29) lösbar und das Verschlussorgan (87) durch einen Elektromagneten (88) in seine Wirkungslage bewegbar und beide Elektromagnete (29, 88) gemeinsam erregbar sind.

16. Einrichtung nach einem der Ansprüche 11 bis 13, dadurch gekennzeichnet, dass die Haltevorrichtung oder -vorrichtungen für mit einem elektrischen Zünder ausgerüstete Sprengkörper (47) einen Schalter (55), der nur bei gelöster Sperre (57) geschlossen ist, und durch vertikalen Zug lösbare Verbindungen für die Zündstromzuführung (50) zum Sprengkörper (47) und vorzugsweise auch ein Zugmittel zum Oeffnen eines am Sprengkörper (47) vorgesehenen, dessen Zünder kurzschliessenden Schaltkontakts (59) aufweist, wobei das Zugmittel wesentlich kürzer ist als die Zündstromzuführung zum Sprengkörper (47).

17. Einrichtung nach einem der Ansprüche 11 bis 16, dadurch gekennzeichnet, dass mehrere Halter (25) zum lösbaren, parallelen Halten der Sprengkörper (1) in einem Kreis angeordnet und je mit einer lösbaren Sperre (105) ausgerüstet sind, um eine Abwärtsbewegung des Sprengkörpers (1) zu verhindern bzw. durch Lösen der Sperre (105) auszulösen, und dass eine Vorrichtung (124-127, 130) zum aufeinanderfolgenden Lösen der Sperren (105) an einer zu dem Kreis konzentrischen Bahn zweckmässig schrittweise bewegbar ist, wobei jede Sperre vorzugsweise von einer Klinke (121) gegen die Kraft einer Feder (120) in ihrer Wirkungslage gehalten ist, und die Vorrichtung zum aufeinanderfolgenden Lösen der Sperren die jeweilige Klinke (121) löst, um die Sperre (105) unter der Wirkung der Feder (120) aus ihrer Wirkungslage zu lösen.

18. Einrichtung nach einem der Ansprüche 11 bis 17, dadurch gekennzeichnet, dass die Haltevorrichtung oder -vorrichtungen eine an ein Luftfahrzeug zu hängende Einheit (134) bilden, die an einem auf dem Boden absetzbaren Gestell (137) aus ihrer Gebrauchslage, zum Halten der Sprengkörper in aufrechter Lage mit nach unten gerichtetem Stützorgan um eine horizontale Achse (143) annähernd um 90° drehbar und in gedrehter Lage fixierbar ist, vorzugsweise durch Lagerzapfen (143), die in einer zu einem kreisförmigen Teil (141) ihrer Lageröffnung (141, 144) zentralen Stellung drehbar sind, und in einer vertikal versetzten Stellung drehfest von einer ihnen angepassten Erweiterung (144) der Lageröffnung aufgenommen werden.

Fig. 1

Fig. 2

Fig. 3

Fig. 4

Fig. 14

Fig. 5

Fig. 13

Fig. 6

Fig. 7

Fig. 8

Fig. 10

Fig. 9

Fig. 11

Fig. 12

Fig. 16

Fig. 15